# EUROPEAN PATENT SPECIFICATION

(11) **EP 3 705 743 B1**
(45) Date of publication and mention of the grant of the patent: **07.07.2021**
(21) Application number: 17821667.7
(22) Date of filing: 03.11.2017
(51) Int. Cl.: F16C 13/00, B60B 33/00

(54) **BEARING FOR SLIDING STRUCTURES**
LAGER FÜR GLEITSTRUKTUREN
PALIER POUR STRUCTURES COULISSANTES

(43) Date of publication of application: 09.09.2020
(73) Proprietor: Iraundi, S.A., 20570 Bergara (Gipuzkoa) (ES)
(72) Inventor: AZKARATE URIBESALGO, Rafael, 20570 Bergara (Gipuzkoa) (ES)
(74) Representative: Herrero & Asociados, S.L.
(86) International application number: PCT/ES2017/070732
(87) International publication number: WO 2019/086728

(56) References cited:
- ES-U- 1 033 253
- US-A- 3 446 537

## Description

### Object of the invention

The present invention relates to a bearing for sliding structures, such as doors in general, and in particular, elevator doors.

An object of the invention consists of creating a bearing capable of providing greater features of load capacity and durability at a reduced cost.

### Background of the invention

The use of bearings for sliding structures of the type that comprise a rolling system based on a cage with encapsulated balls and which respond to the classic configuration in which the race of the balls is established on the peripheral face of a ring that provides inner support to the bearing, and wherein said ring is provided to be mounted on the element with respect to which a relative rotation is intended to be established, is known in the state of the art, see for instance the document ES1033253U. Known bearings for sliding structures usually includes a second ring arranged over the rolling system, and on the same, a metal bushing, conventionally covered by a thermoplastic strip, preferably made of polyamide.

Currently, this stamped metal bushing is configured as a thickened ring to provide durability and load capacity to the bearing. Furthermore, the bushing provides lateral extensions to retain the thermoplastic strip on the same, which provides protection against extreme temperatures and high degrees of humidity, as well as greater chemical and mechanical resistance.

However, these bearings are expensive.

Therefore, in the state of the art it is desirable to provide bearings for sliding structures that are able to have the same features of load capacity and durability as bearings in the state of the art, but at a lower cost.

### Description of the invention

The bearing for sliding structures proposed by the present invention is presented as an improvement with respect to the state of the art, as it satisfactorily achieves the aforementioned objectives indicated as ideal for the art.

The invention consists of a bearing for sliding structures according to claim 1 that comprises an inner ring, a rolling system, an outer ring, a stamped bushing and a thermoplastic strip.

The inner ring has an outer surface and an inner surface, wherein the inner surface is threaded and configured to be fastened to a sliding structure.

The rolling system is made up of a cage and a plurality of metal balls. The cage has an annular configuration and is mounted on the outer surface of the inner ring. The cage is further provided with a plurality of through cavities arranged in radial positions around the same. The balls are housed in the cavities of the cage in a radially mobile way. The balls have a greater diameter than the transverse cross section of the cage in order to allow the bearing to roll. The rolling system is responsible for transforming the rectilinear movement received by the bearing into rotational movement.

The outer ring is metal and provided with an outer surface, an inner surface and pair of side surfaces arranged between both. The inner surface has a groove configured to enable the rolling of the balls.

The stamped bushing is metal and is mounted and fixed to the outer surface of the outer ring.

The thermoplastic strip has an external outer surface, an inner surface in contact with the stamped bushing, and a pair of side surfaces arranged between both. The thermoplastic strip is injected onto the stamped bushing to protect the bearing during the rolling thereof.

The stamped bushing has an omega profile formed by compressible central part in order to retain the stamped bushing between the outer ring and the thermoplastic strip, a first foot sized to make contact with the side surface of the thermoplastic strip, and a second foot sized to make contact with the side surface of the outer ring.

By configuring the stamped bushing with an omega profile, the invention provides a hollow or empty area which reduces the weight and the amount of material used for the piece. Furthermore, this omega configuration allows a central part with the capacity for compression to be provided, and therefore it is suitable to be retained between the outer ring and the thermoplastic strip. On the one hand, this compression allows the stamped bushing to be retained in the bearing, and on the other, it reduces the weight and the amount of material conventionally used in the stamped bushing. Therefore, the stamped bushing can be configured with an omega profile, with feet with a shorter length. It is sufficient enough to provide a first foot configured to cover one of the side surfaces of the thermoplastic strip, and a second foot configured to cover one of the side surfaces of the outer ring. The first foot retains the thermoplastic strip on the stamped bushing and the second foot retains the stamped bushing on the outer ring.

According to a preferred embodiment, the central part of the stamped bushing comprises a contact surface in contact with the inner surface of the thermoplastic strip, wherein said contact surface has at least a projection (compressible) configured to retain the thermoplastic strip. Thus, the compression of these projections of the thermoplastic strip maximizes the retention of the thermoplastic strip by the stamped bushing.

According to another preferred embodiment, the stamped bushing comprises at least a hollow, and the thermoplastic strip comprises at least a protrusion, wherein said protrusion is housed in the at least one hollow of the stamped bushing to reinforce the fastening of the thermoplastic strip to the stamped bushing.

According to another preferred embodiment, the bearing further comprises a pair of dust caps mounted on both sides of the outer ring to prevent dirt from entering the same and to protect the rolling of the rolling system.

According to another preferred embodiment, the rolling system further comprises a grease layer of lithium soap to protect it from environmental agents. This grease layer of lithium soap provides a lifetime lubrication that guarantees the proper functioning of the bearing, prevents the wear of components and isolates them from humidity and dirt.

Preferably, the thermoplastic strip consists of a polyamide strip, and more preferably, of polyamide 11. This polyamide has several advantages, such as:
- it is flame-retardant;
- it has low humidity absorption, and therefore maintains dimensional stability;
- it has a high chemical resistance to fuels, oils, gases, water, solvents and industrial liquids;
- it has a high mechanical resistance to impacts, elongation and abrasion;
- it has a flexible, plastic and elastic behavior;
- it has a high resistance to ageing, high durability, etc.;
- it has a wide range of operation: from -60°C to +150°C.

Preferably, the cage is made of a thermoplastic material, preferably polyamide, due to the aforementioned advantages.

Preferably, the balls are made of steel, which provides strong resistance and durability to the rolling system of the bearing.

Preferably, the outer ring is made of a rectified tempered metal material.

Preferably, the inner ring is machined as a single piece.

Preferably, the thermoplastic strip has a substantially U-shaped profile to be coupled to a guide rail for a sliding structure.

### Description of the drawings

As a complement to the description being made, and for the purpose of helping to make the characteristics of the invention more readily understandable, in accordance with a preferred practical embodiment thereof, said description is accompanied by a set of drawings constituting an integral part thereof which, by way of illustration and not limitation, represent the following:
Figure 1 is a perspective view of the bearing according to a preferred embodiment of the present invention.
Figure 2 shows the stamped bushing according to a preferred embodiment of the invention. Figure 2a shows a perspective view of the stamped bushing. Figure 2b shows a view of a transverse cross section of the stamped bushing.
Figure 3 shows a perspective view of the stamped bushing mounted on the outer ring, according to a preferred embodiment of the present invention.
Figure 4 shows a perspective view of the thermoplastic strip arranged on stamped bushing shown in figure 3.
Figure 5 shows a view a transverse cross section of the thermoplastic strip, the stamped bushing and the outer ring shown in figure 4.

### Preferred embodiment of the invention

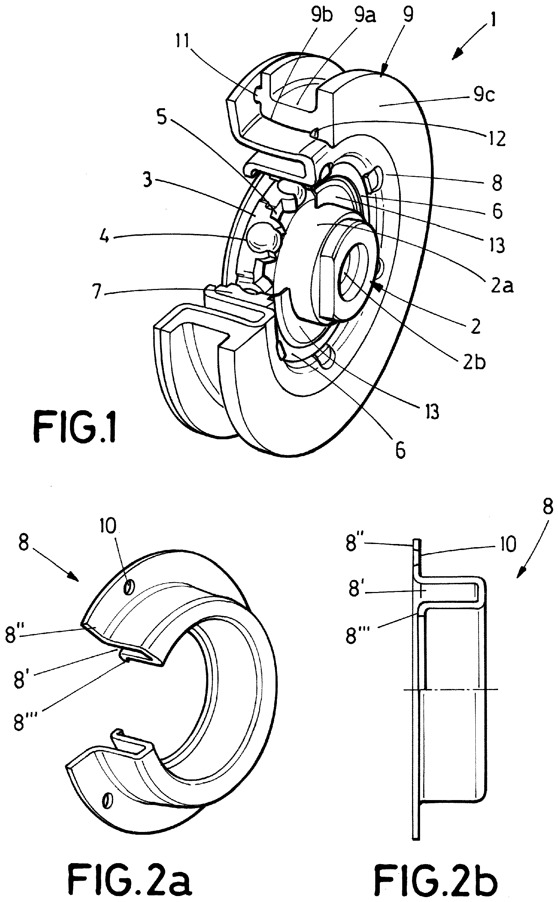

Figure 1 shows a bearing (1) for sliding structures which comprises an inner ring (2), a rolling system formed by an annular cage (3) and a plurality of metal balls (4), an outer ring (6), a pair of dust caps (13) arranged on both sides of the outer ring (6), a stamped bushing (8) and a thermoplastic strip (9).

The inner ring (2) has an outer surface (2a) and an inner surface (2b). As observed in figure 1, the inner surface (2b) being threaded and configured to be fastened to a sliding structure, driven by a rectilinear movement to carry out the advancement.

The cage (3) of the rolling system is mounted on the outer surface (2a) of the inner ring (2) and is provided with a plurality of through cavities (5), arranged in radial positions around the same.

The rolling system is completed with a plurality of metal balls (4), preferably made of steel, housed in the cavities (5) in a radially mobile way, wherein each ball (4) has a greater diameter than the transverse cross section of the cage (3) in order to enable the bearing (1) to roll.

The rolling system is responsible for transforming the rectilinear movement received by the inner ring (2) into rotational movement.

The rolling system preferably includes a grease layer of lithium soap to protect it from environmental agents.

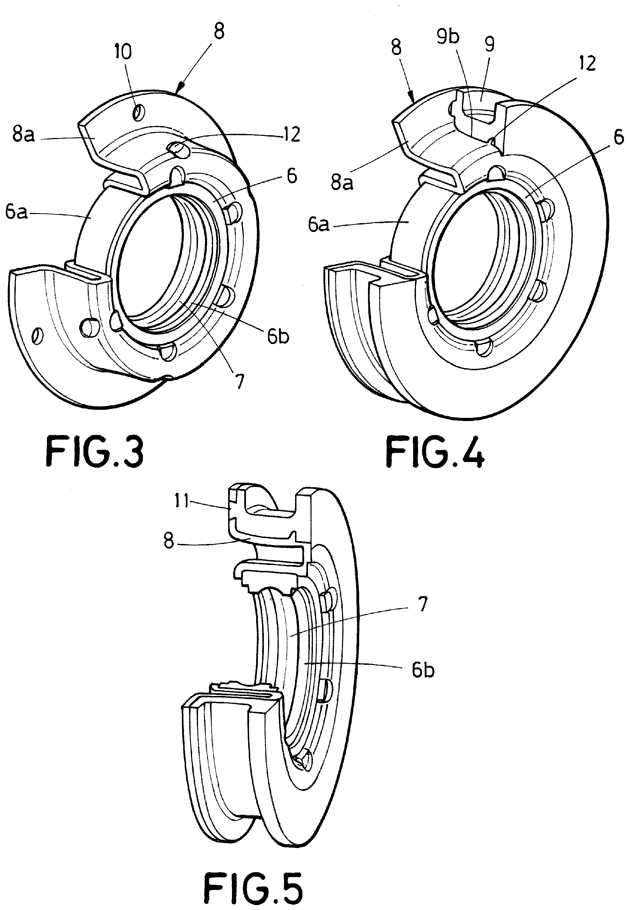

The outer ring (6) is arranged on the rolling system. The outer ring (6) is metal and has an outer surface (6a), an inner surface (6b) and pair of side surfaces (6c) arranged between both. As can be seen in figure 1, and also in figures 3, 4 and 5, the inner surface (6b) of the outer ring (6) has a groove (7) configured to enable the balls (4) to roll throughout the same.

Arranged on both sides of the outer ring (6) is a pair of dust caps (13) to prevent dirt from entering the same and to protect the rolling of the rolling system.

The stamped bushing (8) is arranged on the outer ring (6). The stamped bushing (8) is metal and is mounted and fixed to the outer surface (6a) of the outer ring (6). As can be seen in figure 1, and especially in figures 2a and 2b, the busing (8) has an omega profile formed by a compressible central part (8') extended to both sides of the bearing (1), a first foot (8") sized in order to retain the thermoplastic strip (9), and a second foot (8''') sized in order to retain the outer ring (6).

The stamped bushing (8) is retained by the compression of the central part (8') thereof between the outer ring (6) and the thermoplastic strip (9).

Likewise, as shown in figures 1, 2a, 2b and 3, for the purpose of strengthening the retention of the thermoplastic strip (9) on the stamped bushing (8), the stamped bushing (8) can incorporate at least a hollow (10) and the thermoplastic strip (9) at least a protrusion (11) housed in the at least one hollow (10) of the stamped bushing (8).

Furthermore, as shown in figures 1, 3 and 4, for the purpose of further strengthening the retention of the thermoplastic strip (9) on the stamped bushing (8), the central part (8') of the stamped bushing can incorporate at least a projection (12) on a contact surface (8a) of said stamped bushing (8), wherein said contact surface (8a) makes contact with the inner surface (9b) of the thermoplastic strip (9).

Lastly, arranged on the busing (8) is the thermoplastic strip (9), deposited by injection and provided with an external outer surface (9a), an inner surface (9b) in contact with the stamped bushing (8), and a pair of side surfaces (9c) arranged between the two. As can be observed in figures 1, 4 and 5, one of the side surfaces (9c) is in contact with one of the feet (8", 8'''), and specifically, with the first foot (8") of the stamped bushing (8) to retain the thermoplastic strip (9) on the stamped bushing (8).

Preferably, as shown in figures 1, 4 and 5, the thermoplastic strip (9) has a substantially U-shaped profile to couple to a guide rail for a sliding structure.

Lastly, in light of this description and figures, the person skilled in the art may understand that the invention has been described according to some preferred embodiments thereof, but that multiple variations may be introduced in said preferred embodiments without detracting from the object of the invention as claimed.

## Claims

1. A bearing (1) for sliding structures comprising:
- an inner ring (2) with an outer surface (2a) and an inner threaded surface (2b) configured to be fastened to a sliding structure,
- a rolling system formed by an annular cage (3) and a plurality of metal balls (4), wherein the cage (3) is mounted on the outer surface (2a) of the inner ring (2) and is provided with a plurality of through cavities (5) arranged in radial positions around the same, and wherein the balls (4) are housed in the cavities (5) in a radially mobile way, wherein each ball (4) has a greater diameter than the transverse cross section of the cage (3) in order to enable the bearing (1) to roll,
- an outer metal ring (6), mounted on the rolling system and provided with an outer surface (6a), an inner surface (6b), and a pair of side surfaces (6c) arranged between both, wherein the inner surface (6b) has a groove (7) configured to allow the balls (4) to roll,
- a metal stamped bushing (8) mounted and fixed to the outer surface (6a) of the outer ring (6), and,
- an injected thermoplastic strip (9) with an external outer surface (9a), an inner surface (9b) in contact with the stamped bushing (8), and a pair of side surfaces (9c) arranged between the two,
**characterized in that**
- the stamped bushing (8) has an omega profile formed by compressible central part (8') in order to retain the stamped bushing (8) between the outer ring (6) and the thermoplastic strip (9), a first foot (8") sized to make contact with the side surface (9c) of the thermoplastic strip (9), and a second foot (8''') sized to make contact with the side surface (6c) of the outer ring (6).

2. The bearing (1) for sliding structures according to claim 1, **characterized in that** the central part (8') of the stamped bushing (8) comprises a contact surface (8a) in contact with the inner surface (9b) of the thermoplastic strip, wherein said contact surface (8a) has at least a projection (12) configured to retain the thermoplastic strip (9).

3. The bearing (1) for sliding structures, according to any of the preceding claims, **characterized in that** the stamped bushing (8) comprises at least a hollow (10), and **in that** the thermoplastic strip (9) comprises at least a protrusion (11), wherein said protrusion (11) is housed in the at least one hollow (10) of the stamped bushing (8) to reinforce the fastening of the thermoplastic strip (9) to the stamped bushing (8).

4. The bearing (1) for sliding structures, according to any of the preceding claims, **characterized in that** it further comprises a pair of dust caps (13) mounted on both sides of the outer ring (6) to prevent dirt from entering the same and to protect the rolling of the rolling system.

5. The bearing (1) for sliding structures, according to any of the preceding claims, **characterized in that** the rolling system further comprises a grease layer of lithium soap to protect it from environmental agents.

6. The bearing (1) for sliding structures, according to any of the preceding claims, **characterized in that** the thermoplastic strip (9) consists of a polyamide strip.

7. The bearing (1) for sliding structures, according to any of the preceding claims, **characterized in that** the cage (3) is made of polyamide.

8. The bearing (1) for sliding structures, according to any of the preceding claims, **characterized in that** the balls (4) are made of steel.

9. The bearing (1) for sliding structures, according to any of the preceding claims, **characterized in that** the outer ring (6) is rectified tempered metal.

10. The bearing (1) for sliding structures, according to any of the preceding claims, **characterized in that** the inner ring is machined as a single piece.

11. The bearing (1) for sliding structures, according to any of the preceding claims, **characterized in that** the thermoplastic strip (9) has a substantially U-shaped profile to couple to a guide rail for a sliding structure.

## Patentansprüche

1. Lager (1) für Gleitstrukturen, umfassend:
- einen Innenring (2) mit einer Außenfläche (2a) und einer mit einem Gewinde versehenen Innenfläche (2b) zur Befestigung an einer Gleitstruktur,
- ein Wälzsystem, das aus einem ringförmigen Käfig (3) und einer Mehrzahl von metallischen Kugeln (4) gebildet ist, wobei der Käfig (3) an der Außenfläche (2a) des Innenrings (2) angebracht und mit einer Mehrzahl von durchgehenden Hohlräumen (5), die an radialen Stellen um selbigen angeordnet sind, versehen ist und wobei die Kugeln (4) radial beweglich in den Hohlräumen (5) aufgenommen sind, wobei die Kugeln (4) jeweils einen Durchmesser aufweisen, der größer ist als der Querschnitt des Käfigs (3), so dass das Lager (1) drehen kann,
- einen metallischen Außenring (6), der an dem Wälzsystem angebracht ist und mit einer Außenfläche (6a), einer Innenfläche (6b) und zwei zwischen diesen angeordneten Seitenflächen (6c) versehen ist, wobei die Innenfläche (6b) eine Nut (7) aufweist, die dazu ausgebildet ist, ein Drehen der Kugeln (4) zu ermöglichen,
- eine gestanzte Buchse (8) aus Metall, die an der Außenfläche (6a) des Außenrings (6) angebracht und befestigt ist, und
- ein gespritztes thermoplastisches Band (9) mit einer äußeren Außenfläche (9a), einer an der gestanzten Buchse (8) anliegenden Innenfläche (9b) und zwei zwischen diesen angeordneten Seitenflächen (9c),
**dadurch gekennzeichnet, dass**
die gestanzte Buchse (8) ein Omega-Profil aufweist, das durch einen komprimierbaren mittleren Abschnitt (8') zum Halten der gestanzten Buchse (8) zwischen dem Außenring (6) und dem thermoplastischen Band (9), einen ersten Fuß (8"), der derart dimensioniert ist, dass er an der Seitenfläche (9c) des thermoplastischen Bands (9) anliegt, und einen zweiten Fuß (8'''), der derart dimensioniert ist, dass er an der Seitenfläche (6c) des Außenrings (6) anliegt, gebildet ist.

2. Lager (1) für Gleitstrukturen nach Anspruch 1, **dadurch gekennzeichnet, dass** der mittlere Abschnitt (8') der gestanzten Buchse (8) eine Kontaktfläche (8a) umfasst, die an der Innenfläche (9b) des thermoplastischen Bands anliegt, wobei die Kontaktfläche (8a) zumindest einen Überstand (12) aufweist, der zum Halten des thermoplastischen Bands (9) ausgebildet ist.

3. Lager (1) für Gleitstrukturen nach einem der vorhergehenden Ansprüche, **dadurch gekennzeichnet, dass** die gestanzte Buchse (8) zumindest eine Ausnehmung (10) umfasst und dass das thermoplastische Band (9) zumindest einen Vorsprung (11) aufweist, wobei zur Verstärkung der Befestigung des thermoplastischen Bands (9) an der gestanzten Buchse (8) der Vorsprung (11) in der mindestens einen Ausnehmung (10) der gestanzten Buchse (8) aufgenommen ist.

4. Lager (1) für Gleitstrukturen nach einem der vorhergehenden Ansprüche, **dadurch gekennzeichnet, dass** das Lager des Weiteren zwei Staubkappen (13) umfasst, die an beiden Seiten des Außenrings (6) angebracht sind, um ein Eindringen von Schmutz in diesen zu verhindern und das Drehen des Wälzsystems zu sichern.

5. Lager (1) für Gleitstrukturen nach einem der vorhergehenden Ansprüche, **dadurch gekennzeichnet, dass** das Wälzsystem zum Schutz vor Umwelteinflüssen des Weiteren eine Fettschicht aus Lithiumseife umfasst.

6. Lager (1) für Gleitstrukturen nach einem der vorhergehenden Ansprüche, **dadurch gekennzeichnet, dass** das thermoplastische Band (9) aus einem Polyamid-Band besteht.

7. Lager (1) für Gleitstrukturen nach einem der vorhergehenden Ansprüche, **dadurch gekennzeichnet, dass** der Käfig (3) aus Polyamid hergestellt ist.

8. Lager (1) für Gleitstrukturen nach einem der vorhergehenden Ansprüche, **dadurch gekennzeichnet, dass** die Kugeln (4) aus Stahl hergestellt sind.

9. Lager (1) für Gleitstrukturen nach einem der vorhergehenden Ansprüche, **dadurch gekennzeichnet, dass** der Außenring (6) aus geschliffenem gehärtetem Metall hergestellt ist.

10. Lager (1) für Gleitstrukturen nach einem der vorhergehenden Ansprüche, **dadurch gekennzeichnet, dass** der Innenring einstückig gefertigt ist.

11. Lager (1) für Gleitstrukturen nach einem der vorhergehenden Ansprüche, **dadurch gekennzeichnet, dass** das thermoplastische Band (9) ein im Wesentlichen U-förmiges Profil zur Verbindung mit einer Führungsschiene für eine Gleitstruktur aufweist.

## Revendications

1. Palier (1) pour structures coulissantes comprenant :
une bague interne (2) avec une surface externe (2a) et une surface filetée interne (2b) configurée pour être fixée sur une structure coulissante,
un système de roulement formé par une cage annulaire (3) et une pluralité de billes métalliques (4), dans lequel la cage (3) est montée sur la surface externe (2a) de la bague interne (2) et est prévue avec une pluralité de cavités débouchantes (5) agencées dans des positions radiales autour de cette dernière, et dans lequel les billes (4) sont logées dans les cavités (5) d'une manière radialement mobile, dans lequel chaque bille (4) a un diamètre supérieur à la section transversale de la cage (3) afin de permettre au palier (1) de rouler,
une bague métallique externe (6) montée sur le système de roulement et prévue avec une surface externe (6a), une surface interne (6b) et une paire de surfaces latérales (6c) agencées entre les deux, dans lequel la surface interne (6b) a une rainure (7) configurée pour permettre aux billes (4) de rouler,
une douille métallique estampée (8) montée et fixée sur la surface externe (6a) de la bague externe (6), et
une bande thermoplastique injectée (9) avec une surface externe extérieure (9a), une surface interne (9b) en contact avec la douille estampée (8) et une paire de surfaces latérales (9c) agencées entre les deux,
**caractérisé en ce que** :
la douille estampée (8) a un profil d'oméga formé par la partie centrale compressible (8') afin de retenir la douille estampée (8) entre la bague externe (6) et la bande thermoplastique (9), un premier pied (8") dimensionné pour établir le contact avec la surface latérale (9c) de la bande thermoplastique (9), et un second pied (8''') dimensionné pour établir le contact avec la surface latérale (6c) de la bague externe (6).

2. Palier (1) pour structures coulissantes selon la revendication 1, **caractérisé en ce que** la partie centrale (8') de la douille estampée (8) comprend une surface de contact (8a) en contact avec la surface interne (9b) de la bande thermoplastique, dans lequel ladite surface de contact (8a) a au moins une saillie (12) configurée pour retenir la bande thermoplastique (9).

3. Palier (1) pour structures coulissantes selon l'une quelconque des revendications précédentes, **caractérisé en ce que** la douille estampée (8) comprend au moins un creux (10), et **en ce que** la bande thermoplastique (9) comprend au moins une saillie (11), dans lequel ladite saillie (11) est logée dans le au moins un creux (10) de la douille estampée (8) afin de renforcer la fixation de la bande thermoplastique (9) sur la douille estampée (8).

4. Palier (1) pour structures coulissantes selon l'une quelconque des revendications précédentes, **caractérisé en ce qu'**il comprend en outre une paire de capuchons anti-poussière (13) montés des deux côtés de la bague externe (6) pour empêcher la saleté d'entrer dans cette dernière et pour protéger le roulement du système de roulement.

5. Palier (1) pour structures coulissantes selon l'une quelconque des revendications précédentes, **caractérisé en ce que** le système de roulement comprend en outre une couche de graisse de savon au lithium pour le protéger contre les agents environnementaux.

6. Palier (1) pour structures coulissantes selon l'une quelconque des revendications précédentes, **caractérisé en ce que** la bande thermoplastique (9) se compose d'une bande de polyamide.

7. Palier (1) pour structures coulissantes selon l'une quelconque des revendications précédentes, **caractérisé en ce que** la cage (3) est réalisée à partir de polyamide.

8. Palier (1) pour structures coulissantes selon l'une quelconque des revendications précédentes, **caractérisé en ce que** les billes (4) sont réalisées à partir d'acier.

9. Palier (1) pour structures coulissantes selon l'une quelconque des revendications précédentes, **caractérisé en ce que** la bague externe (6) est du métal trempé rectifié.

10. Palier (1) pour structures coulissantes selon l'une quelconque des revendications précédentes, **caractérisé en ce que** la bague interne est usinée d'un seul tenant.

11. Palier (1) pour structures coulissantes selon l'une quelconque des revendications précédentes, **caractérisé en ce que** la bande thermoplastique (9) a un profil sensiblement en forme de U pour se coupler à un rail de guidage pour une structure coulissante.
